# EUROPÄISCHE PATENTANMELDUNG

(11) **EP 0 816 470 A2**
(43) Veröffentlichungstag der Anmeldung: **07.01.1998**
(21) Anmeldenummer: 97201852.7
(22) Anmeldetag: 17.06.1997
(51) Int. Cl.: C09K 11/02, H01J 29/18, H01J 29/20

(54) **Leuchtstoffzubereitung mit SIO2-Partikel-Beschichtung**

(30) Priorität: 29.06.1996 DE 19626219
(71) Anmelder: Philips Patentverwaltung GmbH, 22335 Hamburg (DE); Philips Electronics N.V., 5621 BA Eindhoven (NL)
(72) Erfinder: Picht, Friederike Dipl.-Ing. (FH), Röntgenstrasse 24, 22335 Hamburg (DE); Bredol, Michael, Dr., Röntgenstrasse 24, 22335 Hamburg (DE); Opitz, Joachim, Dr., Röntgenstrasse 24, 22335 Hamburg (DE); Vollebregt, Frans, Dr., Röntgenstrasse 24, 22335 Hamburg (DE)
(74) Vertreter: Schmalz, Günther

(57) **Zusammenfassung**

Die Erfindung betrifft einen Bildschirm mit einer Leuchtstoffschicht, die eine Leuchtstoffzubereitung aus einem Leuchtstoff mit einer Beschichtung mit einer Sauerstoffverbindung eines der Elemente Magnesium, Calcium, Barium, Zink und Aluminium und mit kolloidalem SiO₂ mit einer mittleren Partikelgröße 70 nm ≤ d ≤ 130 nm enthält.
Sie betrifft weiterhin eine Leuchtstoffzubereitung aus einem Leuchtstoff mit einer Beschichtung mit einer Sauerstoffverbindung eines der Elemente Magnesium, Calcium, Barium, Zink und Aluminium und mit kolloidalem SiO₂ mit einer mittleren Partikelgröße 70 ≤ d ≤ 130 nm sowie ein Verfahren zu deren Herstellung.

## Beschreibung

Die Erfindung betrifft einen Bildschirm, insbesondere einen Farbbildschirm für eine Kathodenstrahlröhre, mit einer Leuchtstoffschicht, die eine Leuchtstoffzubereitung aus einem Leuchtstoff mit einer Beschichtung mit einer Sauerstoffverbindung eines der Elemente Magnesium, Calcium, Barium, Zink und Aluminium und kolloidalem SiO₂ enthält.

Bildschirme weisen auf der Innenseite der Schirmfläche eine strukturierte Leuchtstoffschicht auf, die einen oder mehrere Leuchtstoffe in einem Punkt- oder Streifenmuster enthält. Bei Farbbildschirmen besteht das Muster aus Tripeln aus senkrechten Streifen oder aus im Dreieck angeordneten Punkten, wobei jedes Tripel jeweils einen Leuchtstoff in den Grundemissionsfarben Rot, Blau und Grün enthält.

Diese strukturierte Leuchtstoffschicht wird üblicherweise in einem photochemischen Verfahren aufgebracht, das entweder naßchemisch von photosensitiven Leuchtstoffsuspensionen oder in einem trockenen Verfahren von photosensitiven Leuchtstofflacken ausgeht.

Die photosensitiven Leuchtstoffsuspensionen für das naßchemische Verfahren bestehen aus einer Suspension des Leuchtstoffes in Wasser sowie Polyvinylalkohol und Ammoniumdichromat als photoaktivem System. Diese photosensitiven Suspensionen werden unter UV-Lichteinwirkung ausgehärtet.

Von den Leuchtstoffsuspensionen wird gefordert, daß sie stabil gegen Agglomeration sind und gute Sedimentationseigenschaften haben. Die üblichen Leuchtstoffrohmaterialien als solche lassen sich aber nur schlecht in wässrigen Systemen suspendieren, entweder weil sie hydrophoben Charakter haben oder weil die Leuchtstoffkörner agglomeriert sind. Um sie leicht suspendierbar zu machen, werden daher die rohen Leuchtstoffpulver einer Vorbehandlung unterzogen, die die Oberfläche modifiziert, beispielsweise können sie mit einer hydrophilen Beschichtung versehen sein.

Aus der US 5,366,834 ist bereits eine Beschichtung zur Verbesserung der Dispergierfähigkeit von Leuchtstoffen bekannt, die auf eine erste Beschichtung aufgebracht wird und die Zn, Al und/oder ein Erdalkalimetall und weiterhin kolloidales Siliziumoxid, ein Aluminiumoxid-Sol und/oder ein Titanoxid-Sol mit einer Partikelgröße von 50 nm oder weniger enthält. Diese Beschichtung soll gemaß US 5,366,834 Sp.7, Z. 34 bis 40 eine Struktur haben, in der ein Hydroxid von Zn, Al und/oder einem Erdalkalimetall mit SiO₂ .nH₂O (n≥0), Al₂O₃ .nH₂O (n≥0) oder TiO₂ .n H₂O gemischt und an die erste Beschichtung gebunden sind. Es wird auch angenommen, daß die Beschichtung ein Silikät oder ein Oxid ist, das entsteht, wenn man die Metallionen und z.B. das kolloidale SiO₂ gemeinsam fällt.

An die Qualität von Bildschirmen werden zunehmend höhere Anforderungen in Bezug auf Helligkeit, Farbreinheit, Schleierfreiheit und Konturenschärfe der Leuchtstoffbeschichtung gestellt.

Es ist daher die Aufgabe der vorliegenden Erfindung, einen Bildschirm mit einer Leuchtstoffschicht zur Verfügung zu stellen, die sich durch optimale Helligkeit, Konturenschärfe, Haftung sowie minimale Farbverunreinigung und Schleierfreiheit auszeichnet. Hierzu werden Leuchtstoffzubereitungen benötigt, die besonders stabile Suspensionen ergeben.

Erfindungsgemäß wird die Aufgabe gelöst durch einen Bildschirm mit einer Leuchtstoffschicht, die eine Leuchtstoffzubereitung aus einem Leuchtstoff mit einer Beschichtung mit einer Sauerstoffverbindung eines der Elemente Magnesium, Calcium, Barium, Zink und Aluminium und mit kolloidalem SiO₂ mit einer mittleren Partikelgröße 70 nm ≤ d ≤ 130 nm enthält.

Ein derartiger Bildschirm zeichnet sich durch eine überraschend verbesserte Farbreinheit, Schleierfreiheit sowie Bildschirmhelligkeit aus. Er besitzt eine hohe und homogene Leuchtstoffkonzentration in der strukturierten Leuchtstoffschicht und die einzelnen Leuchtstoffpunkte sind sauber konturiert. Trotz der durch die grobkörnige Beschichtung aufgebrochenen Oberflächenmorphologie der Leuchtstoffpartikel haftet die Leuchtstoffschicht sehr gut auf dem Bildschirmglas und ist homogen und dicht ohne Bildung von "Nadelstich" -Löchern.

Im Rahmen der vorliegenden Erfindung ist es bevorzugt, daß die Sauerstoffverbindung eine Zink- Sauerstoffverbindung ist. Die Zink- Sauerstoffverbindung wirkt als anorganischer Netzwerksbildner und verbessert die Haftung der relativ großen kolloidalen SiO₂ - Partikel durch ihre Bindemitteleigenschaften.

Es ist besonders bevorzugt, daß die Leuchtstoffbeschichtung eine Zink-Sauerstoffverbindung und kolloidales SiO₂ im molaren Verhältnis 5:2 bis 1:20 enthält.

Es ist weiterhin bevorzugt, daß das kolloidale SiO₂ eine monodisperse Partikelgröße hat. Dadurch erhält die Leuchtstoffzubereitung eine Oberflächenmorphologie, die durch einzelne große, miteinander nur schwach agglomerierte und homogen verteilte kolloidale SiO₂ - Partikel gekennzeichnet ist und der Leuchtstoffzubereitung eine besonders hohe Suspensionsstabilität verleiht. Leuchtstoffschichten mit derartigen Leuchtstoffzubereitungen zeigen überraschend geringe Schleierbildung.

Es kann auch bevorzugt sein, daß die Beschichtung ein Farbfilterpigment enthält.

Ebenso kann es bevorzugt sein, daß die Leuchtstoffzubereitung ein Farbfilterpigment in einer separaten Beschichtung enthält.

Die Erfindung betrifft auch eine Leuchtstoffzubereitung aus einem Leuchtstoff mit einer Beschichtung mit einer Sauerstoffverbindung eines der Elemente Magnesium, Calcium, Barium, Zink und Aluminium und mit kolloidalem SiO₂ mit einer mittleren Partikelgröße 70 ≤ d ≤ 130 nm.

Eine derartige Leuchtstoffzubereitung läßt sich sehr gut verarbeiten, weil sie leicht filtrierbar ist, ein Kleines Sedimentationsvolumen hat und ein halbfestes Sediment bildet. Die Leuchtstoffzubereitung ist unempfindlich gegen Zusatz von Elektrolyt und gegen die Anwendung von Ultraschall. Besonders vorteilhaft ist die geringe Fremdhaftung der Leuchtstoffzubereitung auf den nicht belichteten Bereichen der Bildschirmfläche, dadurch ist die Schleierbildung gegenüber dem Stand der Technik erheblich reduziert.

Die Erfindung betrifft weiterhin ein Verfahren zur Herstellung eines Bildschirmes, bei dem
a) in einem naßchemischen Mahlprozeß der Leuchtstoff mittels eines ionischen Silikates dispergiert wird,
b) zu der so erhaltenen Leuchtstoff - Aufschlämmung die wässrige Lösung eines suspendierten mono- oder polydispersen SiO₂-Kolloids mit einer Partikelgröße 70 ≤ d≤ 130 nm hinzugefügt wird,
c) der pH-Wert der Leuchtstoff- Aufschlämmung auf pH ≤6 abgesenkt wird,
d) die wäßrige Lösung eines Salzes eines der Elemente Magnesium, Calcium, Barium, Zink und Aluminium mit einer Sauerstoffsäure der Leuchtstoff - Aufschlämmung hinzugefügt wird,
e) der pH-Wert der Leuchtstoff - Aufschlämmung auf pH ≥9 angehoben wird,
f) die Leuchtstoff - Aufschlämmung gewaschen, filtriert und getrocknet wird.
Dieses Verfahren ermöglicht es, Leuchtstoffe haftfest mit kolloidalem SiO₂ mit großem Partikeldurchmesser zu beschichten.

Nachfolgend wird die Erfindung anhand von Beispielen und drei Figuren weiter erläutert.
**Fig. 1 :** REM- Aufnahme eines mit einem monodispersen SiO₂ - Kolloid mit einer Partikelgröße von 100 nm sowie ZnO beschichteten ZnS:Cu,Au,Al - Leuchtstoffes.
**Fig. 2 :** REM- Aufnahme eines mit ionischem Kaliumsilikat sowie ZnO beschichteten ZnS:Cu,Au,Al - Leuchtstoffes zum Vergleich.
**Fig. 3 :** Zeta - Potential eines mit einem monodispersen SiO₂ - Kolloid mit einer Partikelgröße von 100 nm sowie ZnO beschichteten ZnS:Cu,Au,Al - Leuchtstoffes (Kurve ○) und zum Vergleich eines mit ionischem Kaliumsilikat sowie ZnO beschichteten ZnS:Cu,Au,Al - Leuchtstoffes (Kurve 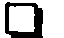 ) in Abhängigkeit vom pH-Wert.

Für die erfindungsgemäße Leuchtstoffzubereitung können als Ausgangsmaterial alle üblichen Leuchtstoffe verwendet, z.B. blaues ZnS:Ag,Al oder ZnS:Ag,Cl, grünes ZnS:Cu,Au,Al, grünes ZnS:Cu,Al oder rotes Y2O2S:Eu. Das Ausgangsmaterial kann auch ein bereits pigmentierter Leuchtstoff sein, der zur Verbesserung des Bildkontrastes mit Farbfilterpigmenten beschichtet ist, z.B. mit CoAl2O4 pigmentiertes ZnS:Ag oder mit Fe2O3 pigmentiertes Y2O2S:Eu.

Die Leuchtstoffbeschichtung enthält eine oder auch mehrere Sauerstoffverbindungen eines der Elemente Magnesium, Calcium, Barium, Zink und Aluminium. Im Rahmen der vorliegenden Erfindung sollen unter "Sauerstoffverbindung" die Hydroxide und Oxide dieser Elemente verstanden werden.

Die Leuchtstoffbeschichtung enthält weiterhin kolloidales SiO₂ mit einer mittleren Partikelgröße von 70 nm und 130 nm. Bevorzugt werden SiO₂ - Kolloide mit einer monodispersen Partikelgröße. Es ist jedoch auch möglich polydisperse Kolloide zu verwenden.

Das molare Verhältnis der eingesetzten Mengen von Sauerstoffverbindung zu kolloidalem SiO₂ in der Leuchtstoffbeschichtung kann in einem weiten Bereich von 5:2 bis zu 1:20 variiert werden. Das Gewichtsverhältnis von Beschichtung zu Leuchtstoff in der Leuchtstoffzubereitung kann von 0,1 Gew.-% bis 1,5 Gew.-% betragen.

Zur Herstellung der erfindungsgemäßen Leuchtstoffzubereitung werden nacheinander die folgenden Verfahrensschritte durchgeführt:
a) In einem naßchemischen Mahlprozeß wird das rohe Leuchtstoffpulver mit einer sehr geringen Menge eines ionischen Silikats z.B. K2SiO3, Na2SiO3 gut dispergiert.
   Die Menge des ionischen Silikates (berechnet als SiO₂) beträgt üblicherweise 0,005 Gew.-% bis 0.05 Gew.-% bezogen auf den Leuchtstoff.
b) Zu dieser Leuchtstoff - Aufschlämmung wird die wässrige Lösung eines gut suspendierten mono- oder polydispersen SiO2-Kolloids mit einer mittleren Partikelgröße von 70 bis 130 nm hinzugefügt, und zwar in einer SiO2-Menge von im allgemeinen 0.1 Gew.-% bis 1 Gew. - % bezogen auf den rohen Leuchtstoff.
c) Mit einer verdünnten Säure, z.B. HNO3, CH3COOH, H₂SO₄ wird der pH-Wert der Leuchtstoff- Aufschlämmung auf pH ≤6 abgesenkt.
d) Die wäßrige Lösung eines wasserlöslichen Salzes eines der Elemente Magnesium, Calcium, Barium, Zink oder Aluminium, z.B. die Acetate, Nitrate , Sulfate oder Chloride wird der Leuchtstoff-Aufschlämmung zugefügt in einer Menge, die 0,010 Gew.-% bis 1,000 Gew.-% der Sauerstoffverbindung bezogen auf den Leuchtstoff entspricht.
e) Mit ammoniakalischer Lösung, Natronlauge oder Kalilauge wird der pH-Wert der Leuchtstoff-Aufschlämmung auf pH ≥9 angehoben und einige Zeit gerührt.
f) Dann läßt man den so beschichteten Leuchtstoff sedimentieren, er wird dekantiert, mehrfach gewaschen und abfiltriert.
g) Bei 140 °C wird die Leuchtstoffzubereitung an Luft ca. 15 Stunden getrocknet.

Gegebenenfalls kann zwischen dem Verfahrensschritt a) und Verfahrensschritt b) die naßchemische Pigmentierung des Leuchtstoffes durchgeführt werden, z.B. als Fällungsreaktion oder als kolloidchemische Reaktion. Nach der Pigmentierung wird die Leuchtstoffaufschlämmung gewaschen und auf 7 ≤pH≤8.5 eingestellt, bevor sie gemäß Verfahrensschritt b) weiterverarbeitet wird.

Bei diesem Beschichtungsverfahren werden in dem Verfahrensschritt c) durch Absenkung des pH-Wertes die einzelnen Partikel des SiO2-Kolloids voneinander getrennt, so daß sie desagglomeriert und homogen in der Aufschlämmung verteilt sind. Nach Hinzufügung von Salzlösung im Verfahrensschritt d) werden bei dem anschließenden Anheben des pH-Wertes auf pH ≥9 im Verfahrensschritt e) die in Suspension befindlichen SiO2-Kolloidpartikel zusammen mit der ausgefällten Sauerstoffverbindung auf der Oberfläche der Leuchtstoffpartikel homogen niedergeschlagen. Durch dieses Verfahren wird eine überraschend haftfeste Beschichtung des Leuchtstoffes erhalten, obwohl die Partikelgröße der SiO₂-Partikel sehr groß ist.

Zur Herstellung der Leuchtstoffsuspensionen für die Bildschirmfabrikation werden die einzelnen Komponenten wie Leuchtstoff, Wasser, Binder, Dispergiermittel, lichtempfindliche Komponente, Antischaum-Mittel, etc. abhängig von dem jeweiligen Leuchtstoff und den Verarbeitungsbedingungen der Suspension in bestimmter Reihenfolge und Konzentration gemischt.

Der erfindungsgemäße Bildschirm kann beispielsweise nach dem als "Flow Coating" bezeichneten Verfahren hergestellt werden:
a) Die Leuchtstoffzubereitung einer Emissionsfarbe wird in einer mittels z.B. Ammoniumdichromat (ADC) photoaktivierten Binderlösung z.B. auf Polyvinylalkohol(PVA)-Basis dispergiert.
b) Die Suspension der Leuchtstoffzubereitung wird auf die Innenseite des Bildschirmglases aufgebracht, unter Rotation des Bildschirmes auf diesem gleichmäßig verteilt und überschüssige Suspension abgeschleudert.
c) Mit ultraviolettem Licht wird die getrocknete Leuchtstoffschicht durch eine Maske hindurch bestrahlt, wodurch die bestrahlten Bereiche der Leuchtstoffschicht aushärten.
d) Mit warmem Wasser wird der Bildschirm entwickelt, wobei die nicht mit UV-Licht bestrahlten Bereiche der Leuchtstoffschicht entfernt werden.
e) Die Leuchtstoffschicht wird getrocknet.
f) Die Prozeßschritte a) - e) werden nacheinander für alle 3 Grundfarben durchgeführt.
g) Der Bildschirm wird bei etwa 400°C ausgeheizt. Die Ausheiztemperatur kann höher liegen, wenn es die Sinterung der während des Beschichtungsprozesses gefällten Pigmente erfordert.

### Ausführungsbeispiel 1

### ZnS:Cu,Au,Al mit 0.31 wt. % kolloidalem SiO2 und 0.42 wt. % ZnO

a) Dispergieren des Leuchtstoffes
   1 kg grün leuchtender Leuchtstoff ZnS:Cu,Au,Al wird nach dem Waschen mit Wasser und Dekantieren mit verdünntem Ammoniak auf pH 9.0 eingestellt. Nach Hinzufügen von 2.1 ml 0.5 molarer K2SiO3-Lösung (0.0062 Gew.-% SiO2 bezogen auf den ZnS-Leuchtstoff) stellt sich ein pH-Wert von 10.7 ein. Diese Suspension wird 3 h naßgemahlen. Nach Abtrennung der Mahlkörper, Hinzufügen von weiteren 1.7 l Wasser und Fein-Naßsieben der Suspension kann die stabilisierte Leuchtstoffaufschlämmung bis zu 24 h auch unter Sedimentation des Leuchstoffes aufbewahrt werden.
b) Beschichten des Leuchtstoffes
   Der gut dispergierten alkalischen Aufschlämmung des ZnS:Cu,Au,Al-Leuchtstoffes mit einem pH-Wert von 8.5 werden 100 ml 0.5 molare Lösung des monodispersen SiO2-Kolloides Monospher® 100 (E.Merck) mit einer Partikelgröße von 100 nm hinzugefügt. Mit 1 molarer CH3COOH-Lösung wird der pH-Wert auf pH 4.5 abgesenkt. Es werden 100 ml 0.5 molare Zn(NO3)2-Lösung hinzugefügt. Mit 3-molarer Ammoniak-Lösung wird der pH-Wert auf pH 9.0 angehoben.
Nach 15 min Rühren läßt man die Aufschlammung des beschichteten ZnS:Cu,Au,Al Leuchtstoffes sedimentieren, dekantiert und wäscht mehrmals. Schließlich wird der beschichtete Leuchtstoff abfiltriert und ca. 15 h bei 140 °C an Luft getrocknet.

### Ausführungsbeispiel 2

### ZnS:Cu,Au,Al mit 0.25 wt. % kolloidalem SiO2 und 0.084 wt. % ZnO

a) Dispergieren des Leuchtstoffes
   1 kg grün leuchtender Leuchtstoff ZnS:Cu,Au,Al wird wie in Ausführungsbeispiel 1 mit K2SiO3-Lösung dispergiert.
b) Beschichten des Leuchtstoffes
   Der gut dispergierten alkalischen Aufschlämmung des ZnS:Cu,Au,Al-Leuchtstoffes mit einem pH-Wert von 8.4 werden 82 ml 0.5 molare Lösung des polydisperses SiO2-Kolloids Syton® W (DuPont de Nemours) mit einer mittleren Partikelgröße von 73 nm hinzugefügt. Mit 1 molarer HNO3-Lösung wird der pH-Wert auf pH 4.0 abgesenkt. Es werden 21 ml 0.5 molare Zn(NO3)2-Lösung hinzugefügt. Mit 3-molarer Ammoniak-lösung wird der pH-Wert auf pH 9.0 angehoben. Nach 30 min Rühren läßt man die Aufschlämmung des beschichteten ZnS:Cu,Au,Al-Leuchtstoffes sedimentieren, dekantiert und wäscht mehrmals. Schließlich wird der beschichtete Leuchtstoff abfiltriert und ca. 15 h bei 140 °C an Luft getrocknet.

### Ausführungsbeispiel 3

### ZnS:Ag,Al mit 0.30 wt. % SiO2 und 0.025 wt. % Al2O3

a) Dispergieren des Leuchtstoffes
   1 kg blau leuchtender ZnS:Ag,Al - Leuchtstoff wird wie in Ausführungsbeispiel 1 mit
   K2SiO3-Lösung dispergiert.
b) Beschichten des Leuchtstoffes
   Der gut dispergierten alkalischen Aufschlämmung des ZnS Ag,Al-Leuchtstoffes mit einem pH-Wert von 8.5 werden 100 ml 0.5 molare Lösung des polydispersen SiO2-Kolloides SYTON® W-Lösung (DuPont De Nemours) mit einer mittleren Partikelgröße von 73 nm hinzugefügt. Mit 0.5 molarer H2SO4-Lösung wird der pH-Wert auf pH 5.5 abgesenkt. Es werden 5 ml 0.5 molare Al2(SO4)3-Lösung hinzugefügt. Mit 3 molarer Ammoniak-Lösung wird der pH-Wert auf pH 9.0 angehoben. Nach 30 min Rühren läßt man die Aufschlämmung des beschichteten ZnS:Ag,Al Leuchtstoffes sedimentieren, dekantiert und wäscht mehrmals. Schließlich wird der beschichtete Leuchtstoff abfiltriert und ca. 15 h bei 140 °C an Luft getrocknet.

### Ausführungsbeispiel 4

### Beschichtung von CoAl2O4 pigmentiertem ZnS:Ag,Cl mit 0.35 wt.% SiO2 und 0.099 wt.% Ba(OH)2

a) Dispergieren des Leuchtstoffes
   1 kg blau leuchtender, mit CoAl2O4 pigmentierter ZnS:Ag,Cl - Leuchtstoff wird wie in
   Ausführungsbeispiel mit K2SiO3-Lösung dispergiert.
b) Beschichten des Leuchtstoffes
   Der gut dispergierten alkalischen Aufschlämmung des pigmentierten ZnS:Ag,Cl-Leuchtstoffes mit einem pH-Wert von 8.5 werden 120 ml 0.5 molare Lösung des monodispersen SiO2-Kolloides MONOSPHER ® 100 (E. Merck) mit einer Partikelgröße von 100 nm hinzugefügt. Mit 1 molarer Essigsäure-Lösung wird der pH-Wert auf pH 4.5 abgesenkt. Es werden 12 ml 0.5 molare Bariumacetat-Lösung hinzugefügt. Mit 1 molarer KOH-Lösung wird der pH-Wert auf pH 10.5 angehoben. Nach 30 min Rühren läßt man die Aufschlämmung des beschichteten ZnS:Ag,Cl Leuchtstoffes sedimentieren, dekantiert und wäscht mehrmals.

Schließlich wird der beschichtete Leuchtstoff abfiltriert und ca. 15 h bei 140 °C an Luft getrocknet.

### Charakterisierung

Eine ZnS:Cu,Au,Al-Leuchtstoffzubereitung gemäß Ausführungsbeispiel 1 wird mit einer Referenzprobe, die nach demselben Verfahren jedoch mit ionischem SiO₂ aus K₂SiO₃ und anschließender Zn(OH)₂/ZnO-Fällung oberflächenbehandelt wurde, verglichen.

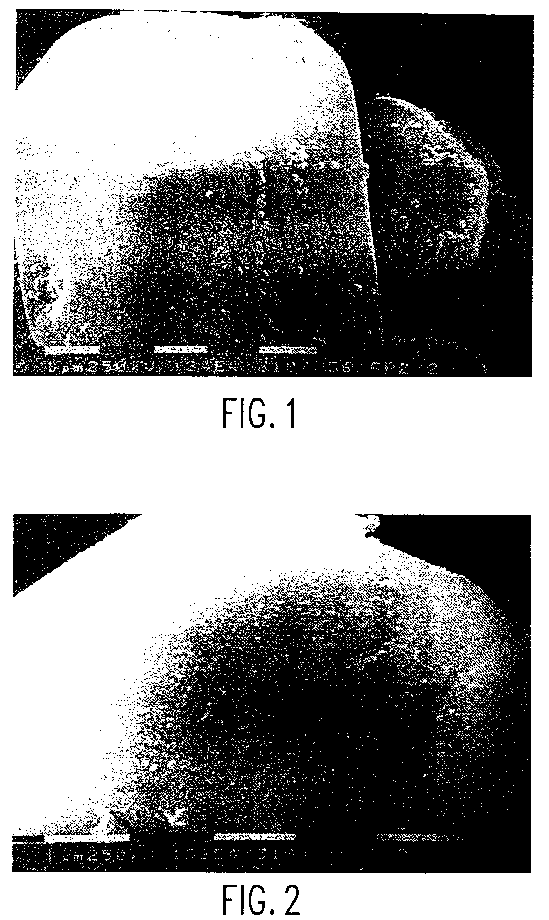

Sehr deutlich unterscheiden sich die mittels REM analysierten Oberflächenmorphologien der beiden nach verschiedenen Verfahren beschichteten Leuchtstoffpartikel. Während die Verwendung des grobkörnigen SiO₂-Kolloids gemäß der Erfindung zu einer klarstruktrurierten Oberfläche mit vereinzelten oder schwach agglomerierten Partikeln auf einer sonst unbeeinflußten Oberfläche des Leuchtstoffpartikels führt (**Fig.1)** ergibt die Verwndung von ionischem Silikat eine diffuse, filmartig dichte Obeflächenbelegung mit einzelnen größeren Agglomeraten (**Fig.2).**

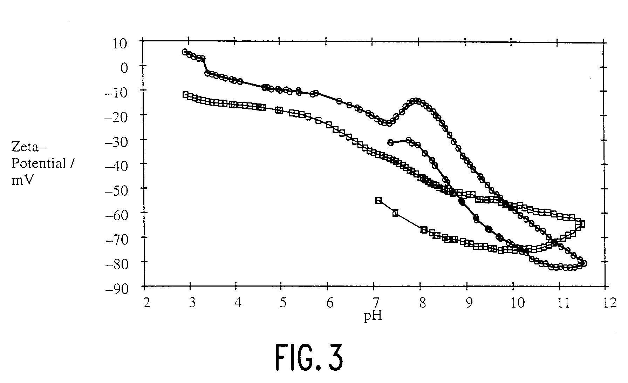

Untersucht wurde außerdem das elektrokinetische Verhalten über das Zeta-Potential mittels ESA-Messungen (electrosonic amplitude). Wie Fig. 3 zeigt, weist die Leuchtstoffzubereitung gemäß der Erfindung ( Kurve ○)über den pH-Bereich von 3 bis 9.5 ein positiveres Zeta-Potential auf als das Referenzbeispiel (Kurve 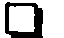 ). In dem für das "Flow-Coating"-Verfahren wichtigen Bereich von pH 7,5 bis 8,5 durchläuft diese Differenz mit 30 mV sogar ihr Maximum aufgrund eines relativen Maximums des Zetapotentials bei 7,9. Eine bei dem mit ionischem SiO₂ behandelten ZnS-Leuchtstoff stärker ausgeprägte Hysterese zwischen der ersten Titration vom neutralen in den alkalischen Bereich und der anschließenden Rücktitration in den sauren Bereich deutet außerdem auf eine stärkere selektive Auflösung des gefällten Zn(OH)2 / ZnO und damit eine größere Instabilität dieser Leuchtstoffzubereitung gemäß dem Referenzbeispiel im Vergleich zu der Leuchtstoffzubereitung nach der Erfindung.

Weiterhin wurden Filtrierbarkeit, Sedimentationsvolumen, Festigkeit des Sediments, Abnahme der Partikelgröße nach Elektrolytzusatz und Ultraschallbehandlung und Schleierbildung verglichen, die Ergebnisse sind in Tab. 1 dargestellt.

**Tab. 1**

| **Eigenschaft** | **Erfindung** | **Referenz** |
|---|---|---|
| Filtrierbarkeit der Suspension ml /15 s | 610 | 30 |
| Sedimentationsvolumen von 100 ml Suspension in 24 h/ ml Feststoff | 14 | 16 |
| relative Festigkeit des Sediments nach 24h Sedimentation | halb-fest | locker |
| Abweichung der mittleren Partikelgröße in Suspension vom Ausgangswert nach Zusatz von NaCl-Elektrolyt und 1 min Ultraschallbehandlung / µm | 0.080 | 0.733 |
| Schleierbildung | 0 | 4 |
| 0 = keine Schleier | | |
| 4 = sehr starke Schleier | | |

Unterschiede ergaben sich auch in bezug auf die Lichtempfindlichkeit der Suspension und das Haftungsvermögen der Leuchtstoffschicht auf dem Bildschirmglas in belichteten Bildschirmbereichen. So ist die Lichtempfindlichkeit der Bildschirmsuspension und das Haftungsvermögen des Leuchtstoffs auf dem Bildschirmglas bei der erfindungsgemäßen Leuchtstoffzuberietung höher als bei der Leuchtstoffzubereitung nach dem Referenzbeispiel.

## Patentansprüche

1. Bildschirm mit einer Leuchtstoffschicht,
die eine Leuchtstoffzubereitung aus einem Leuchtstoff mit einer Beschichtung mit einer Sauerstoffverbindung eines der Elemente Magnesium, Calcium, Barium, Zink und Aluminium und mit kolloidalem SiO₂ mit einer mittleren Partikelgröße 70 nm ≤ d ≤ 130 nm enthält.

2. Bildschirm mit einer Leuchtstoffschicht gemaß Anspruch 1,
dadurch gekennzeichnet,
daß die Sauerstoffverbindung eine Zink- Sauerstoffverbindung ist.

3. Bildschirm mit einer Leuchtstoffschicht gemäß Anspruch 1,
dadurch gekennzeichnet,
daß die Beschichtung eine Zink-Sauerstoffverbindung und kolloidales SiO₂ im molaren Verhältnis 5:2 bis 1:20 enthält.

4. Bildschirm mit einer Leuchtstoffschicht gemaß Anspruch 1,
dadurch gekennzeichnet,
daß das kolloidale SiO₂ eine monodisperse Partikelgröße hat.

5. Bildschirm mit einer Leuchtstoffschicht gemäßAnspruch 1,
dadurch gekennzeichnet,
daß die Beschichtung ein Farbfilterpigment enthält.

6. Bildschirm mit einer Leuchtstoffschicht gemäß Anspruch 1,
dadurch gekennzeichnet,
daß die Leuchtstoffzubereitung ein Farbfilterpigment in einer separaten Beschichtung enthält.

7. Leuchtstoffzubereitung,
aus einem Leuchtstoff mit einer Beschichtung mit einer Sauerstoffverbindung eines der Elemente Magnesium, Calcium, Barium, Zink und Aluminium und mit kolloidalem SiO₂ mit einer mittleren Partikelgröße 70 ≤ d ≤ 130 nm.

8. Verfahren zur Herstellung einer Leuchtstoffzubereitung
gemäß Anspruch 7, wobei
a) in einem naßchemischen Mahlprozeß der Leuchtstoff in einem
ionischen Silikat dispergiert wird,
b) zu der so erhaltenen Leuchtstoff - Aufschlämmung die wässrige Lösung eines suspendierten mono- oder polydispersen SiO₂-Kolloids mit einer Partikelgröße 70 ≤ d≤ 130 nm hinzugefügt wird,
c) der pH-Wert der Leuchtstoff- Aufschlämmung auf pH ≤6 abgesenkt wird,
d) die wäßrige Lösung eines Salzes eines der Elemente Magnesium, Calcium, Barium, Zink und Aluminium mit einer Sauerstoffsäure der Leuchtstoff - Aufschlämmung hinzugefügt wird,
e) mit ammoniakalischer Lösung der pH-Wert der Leuchtstoff - Aufschlämmung auf pH ≥9 angehoben wird,
f) die Leuchtstoff - Aufschlämmung gewaschen, filtriert und getrocknet wird.
